# EUROPEAN PATENT APPLICATION

(11) **EP 4 432 750 A1**
(43) Date of publication of application: **18.09.2024**
(21) Application number: 21963642.0
(22) Date of filing: 12.11.2021
(51) Int. Cl.: H04W 72/04, H04W 24/00, H04B 7/0408, H04W 16/28

(54) **BEAM PROCESSING METHOD AND APPARATUS, USER EQUIPMENT, RIS ARRAY, BASE STATION, AND STORAGE MEDIUM**

(71) Applicant: Beijing Xiaomi Mobile Software Co., Ltd., Beijing 100085 (CN)
(72) Inventor: CHI, Liangang, Beijing 100085 (CN)
(74) Representative: Hughes, Andrea Michelle
(86) International application number: PCT/CN2021/130412
(87) International publication number: WO 2023/082194

(57) **Abstract**

The present invention relates to the field of communication technologies and provides a beam processing method and apparatus, a user equipment (UE), an RIS array, a base station, and a storage medium. The method includes that: the RIS array may send beam information about the RIS array to the base station, then obtain at least one target beam index sent by the base station, determine at least one piece of slot position information, determine a phase shift matrix for a target beam corresponding to the target beam index according to a direction of an incident beam, and perform a reflection and/or refraction operation on the incident beam sent by the base station based on the slot position information and the phase shift matrix. Therefore, the beam processing method provided by the present invention can implement the operation of "reflecting and/or refracting an incident beam to a UE in a specific direction at a specific slot" based on an indication from the base station, which has a high flexibility of beam processing.

## Description

### TECHNICAL FIELD

The present invention relates to the field of communication technologies, and in particular, to a beam processing method and apparatus, a user equipment, an RIS array, a base station, and a storage medium.

### BACKGROUND

In a communication system, communication between a base station and a user equipment (UE) may be implemented based on a reconfigurable intelligent surface (RIS) array. In the communication based on the RIS array, through adjusting a phase shift matrix of the RIS array, incident beams sent from the base station to the RIS array can be reflected and/or refracted by the RIS array to the UE in different directions, so as to build an intelligent programmable wireless environment and enhance signal strength of signals received by the UE, thereby enabling channel control. However, how to control the RIS array to reflect and/or refract a beam in a specific direction at a specific slot is an urgent problem to be solved.

### SUMMARY

Beam processing methods and apparatuses, user equipments (UEs), RIS arrays, base stations and storage media are provided in the present invention, so as to achieve "reflecting and/or refracting an incident beam to a UE in a specific direction at a specific slot".

A beam processing method provided by an example in one aspect of the present invention is applied to a reconfigurable intelligent surface (RIS) array, including:
sending beam information about the RIS array to a base station, wherein the beam information includes a reflected beam set supported by the RIS array and/or a refracted beam set supported by the RIS array, and wherein the reflected beam set includes one or more angle ranges and one or more beam indexes corresponding to at least one reflected beam supported by the RIS array, and the refracted beam set includes one or more angle ranges and one or more beam indexes corresponding to at least one refracted beam supported by the RIS array;
obtaining at least one target beam index sent by the base station and determining at least one piece of slot position information, wherein one piece of slot position information corresponds to at least one target beam index and indicates a position of a slot used by a target beam corresponding to the corresponding target beam index;
determining a phase shift matrix for the target beam corresponding to the target beam index according to a direction of an incident beam, and performing a reflection and/or refraction operation on the incident beam sent by the base station based on the slot position information and the actual phase shift matrix.

A beam processing method provided by an example in another aspect of the present invention is applied to a base station, including:
obtaining beam information about an RIS array, wherein the beam information includes a reflected beam set supported by the RIS array and/or a refracted beam set supported by the RIS array, and wherein the reflected beam set includes one or more angle ranges and one or more beam indexes corresponding to at least one reflected beam supported by the RIS array, and the refracted beam set includes one or more angle ranges and one or more beam indexes corresponding to at least one refracted beam supported by the RIS array;
determining at least one target beam index from the reflected beam set and/or the refracted beam set;
sending the at least one target beam index and at least one piece of slot position information to the RIS array, wherein one piece of slot position information corresponds to at least one target beam index and indicates a position of a slot used by a target beam corresponding to the corresponding target beam index;
sending an incident beam to the RIS array;
determining time-frequency resources used for a beam measurement, obtaining slot indexes by numbering slots configured for the beam measurement in the time-frequency resources, and indicating the time-frequency resources and the time-frequency indexes used for the beam measurement to a UE.

A beam processing method provided by an example in yet another aspect of the present invention is applied to a UE, including:
receiving a beam reflected and/or refracted by an RIS array, and performing a beam measurement on the received beam.

A beam processing apparatus provided by an example in still another aspect of the present invention includes:
a sending module, configured to send beam information about an RIS array to a base station, wherein the beam information includes a reflected beam set supported by the RIS array and/or a refracted beam set supported by the RIS array, and wherein the reflected beam set includes one or more angle ranges and one or more beam indexes corresponding to at least one reflected beam supported by the RIS array, and the refracted beam set includes one or more angle ranges and one or more beam indexes corresponding to at least one refracted beam supported by the RIS array;
an obtaining module, configured to obtain at least one target beam index sent by the base station and determine at least one piece of slot position information, wherein one piece of slot position information corresponds to at least one target beam index and indicates a position of a slot used by a target beam corresponding to the corresponding target beam index; and
a processing module, configured to determine a phase shift matrix for the target beam corresponding to the target beam index according to a direction of an incident beam, and perform a reflection and/or refraction operation on the incident beam sent by the base station based on the slot position information and the phase shift matrix.

A beam processing apparatus provided by an example in still another aspect of the present invention includes:
an obtaining module, configured to obtain beam information sent by an RIS array, wherein the beam information includes a reflected beam set supported by the RIS array and/or a refracted beam set supported by the RIS array, and wherein the reflected beam set includes one or more angle ranges and one or more beam indexes corresponding to at least one reflected beam supported by the RIS array, and the refracted beam set includes one or more angle ranges and one or more beam indexes corresponding to at least one refracted beam supported by the RIS array;
a first determining module, configured to determine at least one target beam index from the reflected beam set and/or the refracted beam set;
a sending module, configured to send the at least one target beam index and at least one piece of slot position information to the RIS array, wherein one piece of slot position information corresponds to at least one target beam index and indicates a position of a slot used by a target beam corresponding to the corresponding target beam index, and
also configured to send an incident beam to the RIS array; and
a second determining module, configured to determine time-frequency resources used for a beam measurement, obtain slot indexes by numbering slots configured for the beam measurement in the time-frequency resources, and indicate the time-frequency resources and the time-frequency indexes used for the beam measurement to a UE.

A beam processing apparatus provided by an example in still another aspect of the present invention includes:
a measuring module, configured to receive a beam reflected and/or refracted by an RIS array, and perform a beam measurement on the received beam.

A communication device provided by an example in still another aspect of the present invention includes one or more processors and one or more memories, wherein a computer program is stored in the one or more memories, and wherein the computer program stored in the one or more memories is executed by the one or more processors to enable the device to perform the method provided by the example in the one aspect as described above.

A communication device provided by an example in still another aspect of the present invention includes one or more processors and one or more memories, wherein a computer program is stored in the one or more memories, and wherein the computer program stored in the one or more memories is executed by the one or more processors to enable the device to perform the method provided by the example in another aspect as described above.

A communication device provided by an example in still another aspect of the present invention includes one or more processors and one or more memories, wherein a computer program is stored in the one or more memories, and wherein the computer program stored in the one or more memories is executed by the one or more processors to enable the device to perform the method provided by the example in yet another aspect as described above.

A communication device provided by an example in still another aspect of the present invention includes one or more processors and an interface circuit;
wherein the interface circuit is configured to receive and transmit code instructions to the one or more processors; and
wherein the one or more processors are configured to run the code instructions to perform the method provided in the example as described in the one aspect.

A communication device provided by an example in still another aspect of the present invention includes one or more processors and an interface circuit;
wherein the interface circuit is configured to receive and transmit code instructions to the one or more processors; and
wherein the one or more processors are configured to run the code instructions to perform the method provided in the example as described in another aspect.

A communication device provided by an example in still another aspect of the present invention includes one or more processors and an interface circuit;
wherein the interface circuit is configured to receive and transmit code instructions to the one or more processors; and
wherein the one or more processors are configured to run the code instructions to perform the method provided in the example as described in yet another aspect.

A computer-readable storage medium provided by an example in still another of the present invention is configured to store instructions, wherein the instructions, when executed, enable the method provided by the example as described in the one aspect to be implemented.

A computer-readable storage medium provided by an example in still another of the present invention is configured to store instructions, wherein the instructions, when executed, enable the method provided by the example as described in another aspect to be implemented.

A computer-readable storage medium provided by an example in still another of the present invention is configured to store instructions, wherein the instructions, when executed, enable the method provided by the example as described in yet another aspect to be implemented.

In view of the above, according to the beam processing methods and apparatuses, the user equipments, the RIS arrays, the base stations, and the storage media provided by the examples of the present invention, the RIS array may send beam information about the RIS array to the base station, then obtain at least one target beam index sent by the base station, determine at least one piece of slot position information, determine a phase shift matrix for a target beam corresponding to the target beam index according to a direction of an incident beam, and perform a reflection and/or refraction operation on the incident beam sent by the base station based on the slot position information and the phase shift matrix. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

For additional aspects and advantages of the present invention, a part of them will be set forth in the following description, and another part of them will be apparent according to the following description or be learned through putting the present invention into practice.

### BRIEF DESCRIPTION OF THE DRAWINGS

The above and/or additional aspects and advantages of the present invention will become apparent and readily understood according to the following description of the examples in conjunction with the accompanying drawings.
FIG. 1 is a schematic flowchart of a beam processing method provided by an example of the present invention.
FIG. 2 is a schematic flowchart of a beam processing method provided by another example of the present invention.
FIG. 3 is a schematic flowchart of a beam processing method provided by another example of the present invention.
FIG. 4 is a schematic flowchart of a beam processing method provided by another example of the present invention.
FIG. 5 is a schematic flowchart of a beam processing method provided by another example of the present invention.
FIG. 6 is a schematic flowchart of a beam processing method provided by another example of the present invention.
FIG. 7 is a schematic flowchart of a beam processing method provided by another example of the present invention.
FIG. 8 is a schematic flowchart of a beam processing method provided by another example of the present invention.
FIG. 9 is a schematic flowchart of a beam processing method provided by another example of the present invention.
FIG. 10 is a schematic flowchart of a beam processing method provided by another example of the present invention.
FIG. 11 is a schematic flowchart of a beam processing method provided by another example of the present invention.
FIG. 12 is a schematic flowchart of a beam processing method provided by another example of the present invention.
FIG. 13 is a schematic structure diagram of a beam processing apparatus provided by an example of the present invention.
FIG. 14 is a schematic structure diagram of a beam processing apparatus provided by another example of the present invention.
FIG. 15 a schematic structure diagram of a beam processing apparatus provided by yet another example of the present invention.
FIG. 16 is a block diagram of a user equipment provided by an example of the present invention.
FIG. 17 is a block diagram of a base station provided by an example of the present invention.

### DETAILED DESCRIPTION OF THE EMBODIMENTS

Embodiments will be described in detail here with the examples thereof illustrated in the drawings. Where the following descriptions involve the drawings, like numerals in different drawings refer to like or similar elements unless otherwise indicated. The implementations described in the following examples do not represent all implementations consistent with the present invention. Rather, they are merely examples of apparatuses and methods consistent with some aspects of the present invention as detailed in the appended claims.

The terms used in the present invention are for the purpose of describing particular examples only, and are not intended to limit the present invention. Terms determined by "a" and "the" in their singular forms used in the examples of the present invention and the appended claims are also intended to include their plural forms, unless clearly indicated otherwise in the context. It is also to be understood that the term "and/or" as used herein is and includes any and all possible combinations of one or more of the associated listed items.

It is to be understood that, although terms "first," "second," "third," and the like may be adopted in the examples of the present invention to describe various information, such information should not be limited to these terms. These terms are only used to distinguish the information of the same type with each other. For example, without departing from the scope of the examples of the present invention, first information may be referred as second information; and similarly, second information may also be referred as first information. Depending on the context, the word "if' as used herein may be interpreted as "when," "upon," or "in response to determining."

The following describes in detail the examples of the present invention. Illustrations of the examples are illustrated in the accompanying drawings, with the same or similar reference numerals referring to the same or similar elements throughout. The examples, which are described below with reference to the accompanying drawings, are illustrated and are intended to explain the present invention, but should not be construed as a limitation of the present invention.

According to the beam processing methods and apparatuses, the user equipments, the RIS arrays, the base stations, and the storage media provided by the examples of the present invention, the RIS array may send beam information about the RIS array to the base station, then obtain at least one target beam index sent by the base station, determine at least one piece of slot position information, determine a phase shift matrix for a target beam corresponding to the target beam index according to a direction of an incident beam, and perform a reflection and/or refraction operation on the incident beam sent by the base station based on the slot position information and the phase shift matrix. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a user equipment (UE) in a specific direction at a specific slot" based on the indication from the base station, which has a high flexibility of beam processing.

The beam processing methods and apparatuses, the user equipments, the RIS arrays, the base stations, and the storage media provided by the present invention are described in detail below with reference to the accompanying drawings.

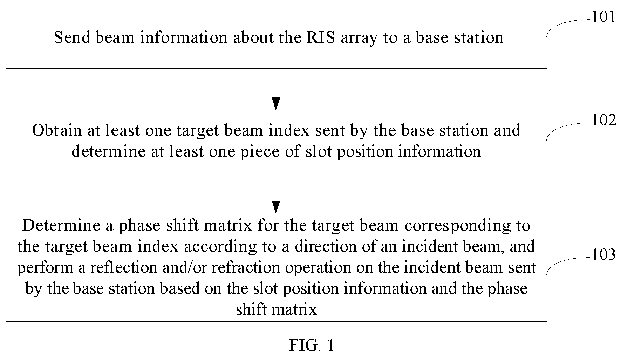

FIG. 1 is a schematic flowchart of a beam processing method provided by an example of the present invention, which is applied to a reconfigurable intelligent surface (RIS) array. As illustrated in FIG. 1, the beam processing method may include the following steps.

At step 101, beam information about the RIS array is sent to a base station.

It should be noted that, in an example of the present invention, the beam information may include a reflected beam set supported by the RIS array and/or a refracted beam set supported by the RIS array. In an example of the present invention, the reflected beam set may include one or more angle ranges and one or more beam indexes corresponding to at least one reflected beam supported by the RIS array. In an example of the present invention, the refracted beam set may include one or more angle ranges and one or more beam indexes corresponding to at least one refracted beam supported by the RIS array.

In another example of the present invention, the beam information may include at least one of the following:
the reflected beam set supported by the RIS array;
the refracted beam set supported by the RIS array;
number of the reflected beams that the RIS array is capable of supporting simultaneously; or
number of the refracted beams that the RIS array is capable of supporting simultaneously.

In an example of the present invention, the angle range may include a first-dimensional angle range and a second-dimensional angle range. Specifically, in an example of the present invention, the first-dimensional angle range may be a horizontal azimuth range. In an example of the present invention, the second-dimensional angle range may be a vertical azimuth range.

Furthermore, in an example of the present invention, the beam index described above may be a two-dimension index. In another example of the present invention, the beam index described above may be a one-dimension index. The angle range and the beam index described above will be described in detail in subsequent examples.

At step 102, at least one target beam index sent by the base station is obtained and at least one piece of slot position information is determined.

In an example of the present invention, the at least one target beam index described above may be sent to the RIS array by the base station through signaling. Specifically, the target beam index described above is a beam index corresponding to a certain beam selected by the base station from the reflected beam set and/or the refracted beam set. That is, the target beam index described above is essentially the beam index of the certain beam among the reflected beams and/or the refracted beams supported by the RIS array.

In an example of the present invention, one piece of slot position information corresponds to at least one target beam index. The piece of slot position information indicates a position of a slot used by a target beam corresponding to the corresponding target beam index.

Furthermore, in an example of the present invention, an approach for the RIS array to determine the at least one piece of slot position information may include at least one of the following:
obtaining the at least one piece of slot position information sent by the base station (for example, through signaling); or
determining the at least one piece of slot position information based on protocol agreement.

Still further, in an example of the present invention, the RIS array may be configured to reflect the beams periodically and/or refract the beams periodically. Alternatively, in another example of the present invention, the RIS array may be configured to reflect the beams aperiodically and/or refract the beams aperiodically. In an example of the present invention, the contents included in the slot position information vary with configurations of the RIS array. The detailed discussion on the contents included in the slot position information under the different configurations will be described in subsequent examples.

At step 103, a phase shift matrix for the target beam corresponding to the target beam index is determined according to a direction of an incident beam, and a reflection and/or refraction operation is performed on the incident beam sent by the base station based on the slot position information and the phase shift matrix.

In an example of the present invention, an approach for determining the phase shift matrix for the target beam corresponding to the target beam index according to the direction of the incident beam may include the following steps.

At step a, an initial incident angle is set, and based on the initial angle, an initial phase shift matrix corresponding to each of the reflected beams and/or the refracted beams supported by the RIS array is determined.

In an example of the present invention, the initial incident angle may be set before the RIS array actually receives the incident beam sent by the base station. The initial incident angle may be any angle. In an example of the present invention, for instance, the initial incident angle may be 0°.

In an example of the present invention, the phase shift matrix described above is a diagonal matrix with phase shift angles of various RIS units of the RIS array as diagonal elements. Different phase shift matrices may cause the RIS array to reflect and/or refract the incident beams in different directions.

Furthermore, in an example of the present invention, the initial phase shift matrix corresponding to each of the reflected beams and/or the refracted beams supported by the RIS array provides such a main function that, assuming that the incident direction of the incident beam is the initial incident angle, it is to obtain the various reflected and/or refracted beams supported by the RIS array correspondingly when the RIS array is enabled to reflect and/or refract the incident beam based on various initial phase shift matrices.

In an example of the present invention, for instance, it is assumed that the RIS array supports Reflected Beam 1 and Refracted Beam 2. The reflection direction of Reflected Beam 1 is a, corresponding to Initial Phase Shift Matrix 1, and the refraction direction of Refracted Beam 2 is b, corresponding to Initial Phase Shift Matrix 2. In this case, assuming that the incident direction of the incident beam is the initial incident angle, it may obtain Reflected Beam 1 when the RIS array reflects the incident beam based on Initial Phase Shift Matrix 1, and may obtain Refracted Beam 2 when the RIS array refracts the incident beam based on Initial Phase Shift Matrix 2.

At step b, an actual incident angle of the incident beam sent by the base station to the RIS array is determined.

In an example of the present invention, the actual incident angle may be the initial incident angle described above. Alternatively, in another example of the present invention, the actual incident angle may not be the initial incident angle described above.

At step c, a phase shift matrix is obtained by adjusting the initial phase shift matrix of the target beam corresponding to the target beam index according to the initial incident angle and the actual incident angle.

It can be seen from the above contents, in an example of the present invention, the target beam corresponding to the target beam index indicated by the base station is substantially the certain reflected or refracted beam supported by the RIS array.

In an example of the present invention, the phase shift matrix of the target beam obtained based on the initial phase shift matrix of the target beam provides such a main function that the target beam may be obtained by enabling the RIS array to reflect and/or refract the incident beam based on the phase shift matrix in the case where the incident direction of the incident beam is taken as the actual incident angle.

Furthermore, in an example of the present invention, an approach for adjusting the initial phase shift matrix may specifically include: adjusting the initial phase shift matrix of the target beam corresponding to the target beam index based on an angle difference between the initial incident angle and the actual incident angle to obtain the phase shift matrix of the above target beam.

Thus, by performing the above steps α-c, it may be determined that "it can obtain the phase shift matrix of the target beam after the RIS array reflects and/or refracts the incident beam in the case where the incident direction of the incident beam is taken as the actual incident angle". In an example of the present invention, after determining the phase shift matrix of the target beam corresponding to the target beam index, the RIS array may perform the reflection and/or refraction operation on the incident beam sent by the base station based on the phase shift matrix at a specific slot indicated by the slot position information to obtain the above target beam, so that the RIS array implements the operation of "reflecting and/or refracting an incident beam in a specific direction at a specific slot".

In view of the above, according to the beam processing method provided by the examples of the present invention, the RIS array may send the beam information about the RIS array to the base station, then obtain at least one target beam index sent by the base station, determine at least one piece of slot position information, determine the phase shift matrix for the target beam corresponding to the target beam index according to the direction of the incident beam, and perform the reflection and/or refraction operation on the incident beam sent by the base station based on the slot position information and the phase shift matrix. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

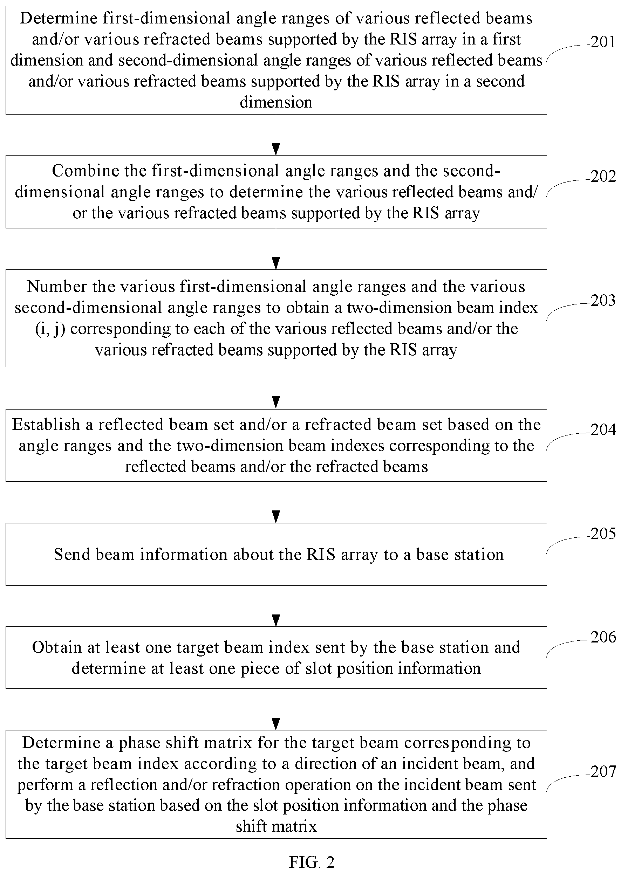

FIG. 2 is a schematic flowchart of a beam processing method provided by another example of the present invention, which is applied to an RIS array. As illustrated in FIG. 2, the beam processing method may include the following steps.

At step 201, first-dimensional angle ranges of various reflected beams and/or various refracted beams supported by the RIS array in a first dimension and second-dimensional angle ranges of various reflected beams and/or various refracted beam supported by the RIS array in a second dimension are determined.

In an example of the present invention, the first dimension may refer to a horizontal dimension, and the second dimension may refer to a vertical dimension.

In an example of the present invention, for instance, it is assumed that the first-dimensional angle ranges of the various reflected beams supported by the RIS array in the first dimension may include: Angle Range 1 of 0°-30°, Angle Range 2 of 30°-60°, and Angle Range 3 of 60°-90°; and the second-dimensional angle ranges of the various reflected beams supported by the RIS array in the second dimension may include: Angle Range 4 of 0°-30°, Angle Range 5 of 30°-60°, and Angle Range 6 of 60°-90°.

At step 202, the first-dimensional angle ranges and the second-dimensional angle ranges are combined to determine the various reflected beams and/or the various refracted beams supported by the RIS array.

In an example of the present invention, a beam direction may be determined by the angle ranges in two dimensions. Thus, the various reflected beams and/or the various refracted beams supported by the RIS array may be obtained by combining each first-dimensional angular range and each second-dimensional angular range in pairs. It should be noted that, in an example of the present invention, the first-dimensional angle range and the second-dimensional angle range combined in pairs are to belong to a same type when combining each first-dimensional angular range and each second-dimensional angular range in pairs. For example, both belong to the angle ranges corresponding to the reflected beams, or both belong to the angle ranges corresponding to the refracted beams.

In an example of the present invention, for instance, Angle Range 1 and Angle Range 4 described above may determine Reflected Beam 1, Angle Range 1 and Angle Range 5 described above may determine Reflected Beam 2, and Angle Range 1 and Angle Range 6 described above may determine Reflected Beam 3. By performing exhaustive operations in this way, it is to obtain each reflected beam and/or each refracted beam supported by the RIS array.

At step 203, the various first-dimensional angle ranges and the various second-dimensional angle ranges are numbered to obtain a two-dimension beam index (i, j) corresponding to each of the various reflected beams and/or the various refracted beams supported by the RIS array.

In an example of the present invention, i in the above index indicates a first-dimensional angle range number of each of the various reflected beams and/or the various refracted beams, while j indicates a second-dimensional angle range number of each of the various reflected beams and/or the various refracted beams.

In an example of the present invention, for instance, the first-dimensional angle ranges of the various reflected beams of the RIS array, including Angle Range 1 of 0°-30°, Angle Range 2 of 30°-60°, and Angle Range 3 of 60°-90°, are numbered as 1, 2, and 3, respectively. The second-dimensional angle ranges of the various reflected beams of the RIS array, including Angle Range 4 of 0°-30°, Angle Range 5 of 30°-60°, and Angle Range 6 of 60°-90°, are numbered as 1, 2, and 3, respectively. Therefore, the two-dimension beam index corresponding to the above Reflected Beam 1 is to be (1, 1), the two-dimension beam index corresponding to the above Reflected Beam 2 is to be (1, 2), the two-dimension beam index corresponding to the above Reflected Beam 3 is to be (1, 3), and so on, so as to obtain the two-dimension index of each reflected beam.

At step 204, a reflected beam set and/or a refracted beam set is established based on the angle ranges and the two-dimension beam indexes corresponding to the reflected beams and/or the refracted beams.

At step 205, beam information about the RIS array is sent to a base station.

At step 206, at least one target beam index sent by the base station is obtained and at least one piece of slot position information is determined.

In an example of the present invention, one piece of slot position information corresponds to at least one target beam index. The piece of slot position information indicates a position of a slot used by a target beam corresponding to the corresponding target beam index.

At step 207, a phase shift matrix for the target beam corresponding to the target beam index is determined according to a direction of an incident beam, and a reflection and/or refraction operation is performed on the incident beam sent by the base station based on the slot position information and the phase shift matrix.

In an example of the present invention, the detailed discussion on steps 205-207 may make reference to relevant discussion in the foregoing example, which is not repeated in this example of the present invention.

In view of the above, according to the beam processing method provided by the examples of the present invention, the RIS array may send the beam information about the RIS array to the base station, then obtain at least one target beam index sent by the base station, determine at least one piece of slot position information, determine the phase shift matrix for the target beam corresponding to the target beam index according to the direction of the incident beam, and perform the reflection and/or refraction operation on the incident beam sent by the base station based on the slot position information and the phase shift matrix. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

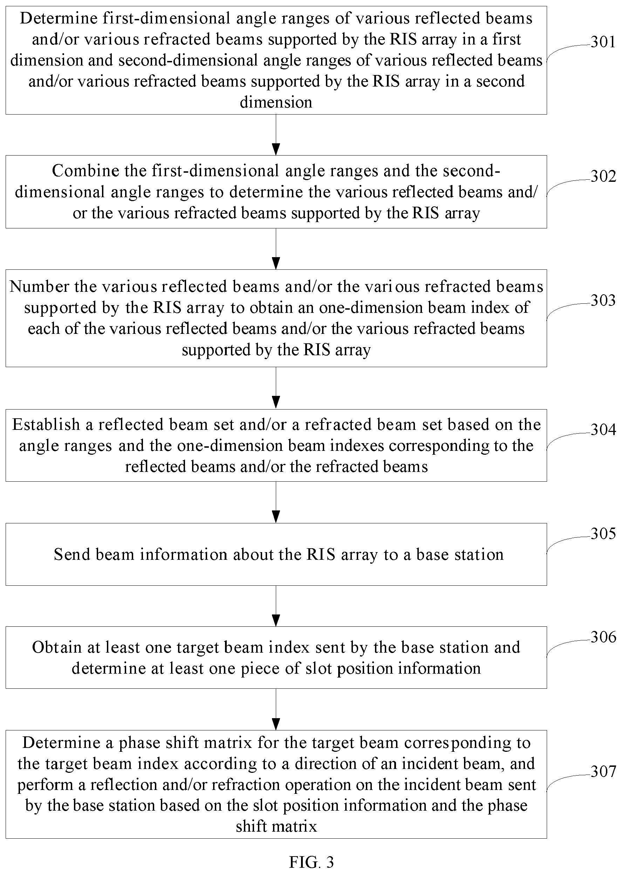

FIG. 3 is a schematic flowchart of a beam processing method provided by another example of the present invention, which is applied to an RIS array. As illustrated in FIG. 3, the beam processing method may include the following steps.

At step 301, first-dimensional angle ranges of various reflected beams and/or various refracted beams supported by the RIS array in a first dimension and second-dimensional angle ranges of various reflected beams and/or various refracted beams supported by the RIS array in a second dimension are determined.

In an example of the present invention, the first dimension may refer to a horizontal dimension, and the second dimension may refer to a vertical dimension.

In an example of the present invention, for instance, it is assumed that the first-dimensional angle ranges of the various reflected beams supported by the RIS array in the first dimension may include: Angle Range 1 of 0°-30°, Angle Range 2 of 30°-60°, and Angle Range 3 of 60°-90°; and the second-dimensional angle ranges of the various reflected beams supported by the RIS array in the second dimension may include: Angle Range 4 of 0°-30°, Angle Range 5 of 30°-60°, and Angle Range 6 of 60°-90°.

At step 302, the first-dimensional angle ranges and the second-dimensional angle ranges are combined to determine the various reflected beams and/or the various refracted beams supported by the RIS array.

In an example of the present invention, a beam direction may be determined by the angle ranges in two dimensions. Thus, the various reflected beams and/or the various refracted beams supported by the RIS array may be obtained by combining each first-dimensional angular range and each second-dimensional angular range in pairs. It should be noted that, in an example of the present invention, the first-dimensional angle range and the second-dimensional angle range combined in pairs are to belong to a same type when combining each first-dimensional angular range and each second-dimensional angular range in pairs. For example, both belong to the angle ranges corresponding to the reflected beams, or both belong to the angle ranges corresponding to the refracted beams.

In an example of the present invention, for instance, Angle Range 1 and Angle Range 4 described above may determine Reflected Beam 1, Angle Range 1 and Angle Range 5 described above may determine Reflected Beam 2, and Angle Range 1 and Angle Range 6 described above may determine Reflected Beam 3. By performing exhaustive operations in this way, it is to obtain each reflected beam and/or each refracted beam supported by the RIS array.

At step 303, the various reflected beams and/or the various refracted beams supported by the RIS array are numbered to obtain an one-dimension beam index of each of the various reflected beams and/or the various refracted beams supported by the RIS array.

In an example of the present invention, after obtaining the various reflected beams and/or the various refracted beams supported by the RIS array in the above step 302, the various reflected beams and/or the various refracted beams supported by the RIS array may be numbered sequentially to obtain the one-dimension index of each of the various reflected beams and/or the various refracted beams.

In an example of the present invention, for instance, Reflected Beam 1, Reflected Beam2, and Reflected Beam 3 described above may be numbered as 1, 2, and 3, respectively. In this case, the one-dimension beam index corresponding to Reflected Beam 1 is to be 1, the one-dimension beam index corresponding to Reflected Beam 2 is to be 2, the one-dimension beam index corresponding to Reflected Beam 3 is to be 3,and so on, so as to obtain the beam index of each reflected beam.

At step 304, a reflected beam set and/or a refracted beam set is established based on the angle ranges and the one-dimension beam indexes corresponding to the reflected beams and/or the refracted beams.

At step 305, beam information about the RIS array is sent to a base station.

At step 306, at least one target beam index sent by the base station is obtained and at least one piece of slot position information is determined.

In an example of the present invention, one piece of slot position information corresponds to at least one target beam index. The piece of slot position information indicates a position of a slot used by a target beam corresponding to the corresponding target beam index.

At step 307, a phase shift matrix for the target beam corresponding to the target beam index is determined according to a direction of an incident beam, and a reflection and/or refraction operation is performed on the incident beam sent by the base station based on the slot position information and the phase shift matrix.

In an example of the present invention, the detailed description on steps 305-207 may make reference to relevant discussion in the foregoing examples, which is not repeated in this example of the present invention.

In view of the above, according to the beam processing method provided by the examples of the present invention, the RIS array may send the beam information about the RIS array to the base station, then obtain at least one target beam index sent by the base station, determine at least one piece of slot position information, determine the phase shift matrix for the target beam corresponding to the target beam index according to the direction of the incident beam, and perform the reflection and/or refraction operation on the incident beam sent by the base station based on the slot position information and the phase shift matrix. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

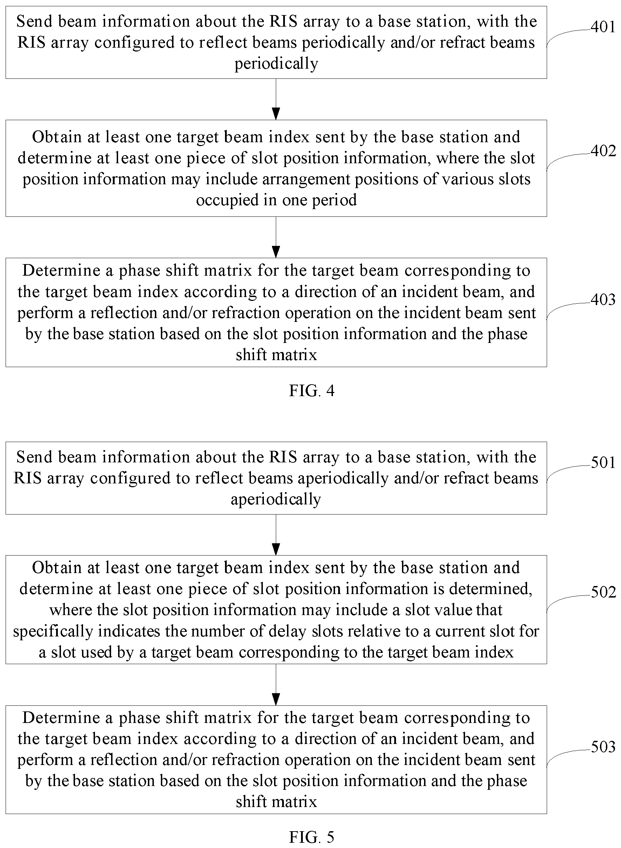

FIG. 4 is a schematic flowchart of a beam processing method provided by another example of the present invention, which is applied to an RIS array. As illustrated in FIG. 4, the beam processing method may include the following steps.

At step 401, beam information about the RIS array is sent to a base station, with the RIS array configured to reflect beams periodically and/or refract beams periodically.

At step 402, at least one target beam index sent by the base station is obtained and at least one piece of slot position information is determined. The slot position information may include arrangement positions of various slots occupied in one period.

In an example of the present invention, one piece of slot position information corresponds to at least one target beam index. The piece of slot position information specifically indicates a position of a slot used by a target beam corresponding to the corresponding target beam index.

The other discussion on the target beam index and the slot position may make reference to the descriptions on the foregoing examples, which is not repeated in this example of the present invention.

Furthermore, in an example of the present invention, when the RIS array is configured to reflect the beams periodically and/or refract the beams periodically, the slot position information may include the arrangement positions of the various slots occupied in one period.

In an example of the present invention, for instance, it is assumed that there are 3 slots in the period of periodic reflection and/or periodic refraction that is configured for the RIS array, Slot 1, Slot 2, and Slot 3 in sequence. In this case, the at least one piece of slot position information that is determined is to be Slot Position Information 1 for indicating the first slot (i.e., Slot 1) in the period, Slot Position Information 2 for indicating the second slot (i.e., Slot 2) in the period, and Slot Position Information 3 for indicating the third slot (i.e., Slot 3) in the period.

In this case, Slot Position Information 1 mainly indicates that the position of the slot used by the target beam corresponding to the corresponding target beam index is the first slot in every period; Slot Position Information 2 mainly indicates that the position of the slot used by the target beam corresponding to the corresponding target beam index is the second slot in every period; and Slot Position Information 3 mainly indicates that the position of the slot used by the target beam corresponding to the corresponding target beam index is the third slot in every period.

At step 403, a phase shift matrix for the target beam corresponding to the target beam index is determined according to a direction of an incident beam, and a reflection and/or refraction operation is performed on the incident beam sent by the base station based on the slot position information and the phase shift matrix.

The approach for determining the phase shift matrix may make reference to the descriptions on the foregoing examples, which is not repeated in this example of the present invention.

In an example of the present invention, for instance, it is assumed that the at least one target beam index sent by the base station, which is obtained in the above step 402, includes the target beam index (1, 1) and the target beam index (1, 2), and the determined slot position information is Slot Position Information 1 described above. Slot Position Information 1 corresponds to the target beam index (1, 1) and the target beam index (1, 2). It is also assumed that in this step 403, according to the direction of the incident beam, the phase shift matrix of the target beam corresponding to the target beam index (1, 1) is determined as Phase Shift Matrix 1, and the phase shift matrix of the target beam corresponding to the target beam index (1, 2) is determined as Phase Shift Matrix 2. In this case, when the reflection and/or refraction operation is performed on the incident beam sent by the base station based on the slot position information and the phase shift matrix, it mainly includes that the incident beam is reflected at the first slot in every period according to both Phase Shift Matrix 1 and Phase Shift Matrix 2, so as to simultaneously obtain the target beam corresponding to the target beam index (1, 1) and the target beam corresponding to the target beam index (1, 2).

In an example of the present invention, other contents on the steps 401-403 may make reference to relevant discussion on the foregoing examples, which are not repeated in this example of the present invention.

In view of the above, according to the beam processing method provided by the examples of the present invention, the RIS array may send the beam information about the RIS array to the base station, then obtain at least one target beam index sent by the base station, determine at least one piece of slot position information, determine the phase shift matrix for the target beam corresponding to the target beam index according to the direction of the incident beam, and perform the reflection and/or refraction operation on the incident beam sent by the base station based on the slot position information and the phase shift matrix. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can achieve the operation of "reflecting and/or refracting an incident beam to a UE in a specific direction at a specific slot" based on the indication from the base station, which has a high flexibility of beam processing.

FIG. 5 is a schematic flowchart of a beam processing method provided by another example of the present invention, which is applied to an RIS array. As illustrated in FIG. 5, the beam processing method may include the following steps.

At step 501, beam information about the RIS array is sent to a base station, with the RIS array configured to reflect beams aperiodically and/or refract beams aperiodically.

At step 502, at least one target beam index sent by the base station is obtained, and at least one piece of slot position information is determined. The slot position information may include a slot value that specifically indicates the number of delay slots relative to a current slot for a slot used by a target beam corresponding to the target beam index.

In an example of the present invention, one piece of slot position information corresponds to at least one target beam index. The piece of slot position information specifically indicates a position of a slot used by a target beam corresponding to the corresponding target beam index.

The other discussion on the target beam index and the slot position may make reference to the descriptions on the foregoing examples, which are not repeated in this example of the present invention.

In an example of the present invention, when the RIS array is configured to reflect the beams aperiodically and/or refract the beams aperiodically, the slot position information may include the slot value that specifically indicates the number of delay slots relative to a current slot for a slot used by a target beam corresponding to the target beam index. The current slot refers to a slot occupied by the base station to send the at least one target beam index.

In an example of the present invention, the at least one piece of slot position information may include only one piece of slot position information, and the slot value in the one piece of slot position information may be n+k, where n and k are both integers, n is the slot number of the current slot, and k indicates the number of delayed slots. In this case, the used slot indicated by the one piece of slot position information is the slot numbered as n+k.

In an example of the present invention, for instance, it is assumed that one piece of slot position information is determined with k in the one piece of slot position information being 2, and it is assumed that the slot number of the current slot is 3. Thus, it may be determined that the used slot indicated by the one piece of slot position information is to be the slot numbered as 3+2=5.

In another example of the present invention, the at least one piece of slot position information may include a plurality of pieces of slot position information, and the slot values in the plurality of pieces of slot position information may be n+k+[m₁, m₂, ..., m_{T}], where [mi, m₂, ..., m_{T}] is an integer sequence greater than or equal to 0 and T is a positive integer. In this case, the used slots indicated by the plurality of pieces of slot position information may be the slots numbered as n+k, n+k+m₁, n+k+m₁+m₂, ..., n+k+m₁+m₂+...+m_{T}.

In an example of the present invention, for instance, it is assumed that the plurality of pieces of slot position information are determined with k in the plurality of pieces of slot position information being 2 and [m₁, m₂]=[1, 2], and it is assumed that the slot number of the current slot is 3. Therefore, it may be determined that the used slots indicated by the plurality of slot position information are to be the slots numbered as 3+2=5, 3+2+1=6, and 3+2+1+2=8.

At step 503, a phase shift matrix for the target beam corresponding to the target beam index is determined according to a direction of an incident beam, and a reflection and/or refraction operation is performed on the incident beam sent by the base station based on the slot position information and the phase shift matrix.

In an example of the present invention, the detailed discussion on steps 501-503 may make reference to relevant discussion in the foregoing examples, which is not repeated in this example of the present invention.

In view of the above, according to the beam processing method provided by the examples of the present invention, the RIS array may send the beam information about the RIS array to the base station, then obtain at least one target beam index sent by the base station, determine at least one piece of slot position information, determine the phase shift matrix for the target beam corresponding to the target beam index according to the direction of the incident beam, and perform the reflection and/or refraction operation on the incident beam sent by the base station based on the slot position information and the phase shift matrix. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

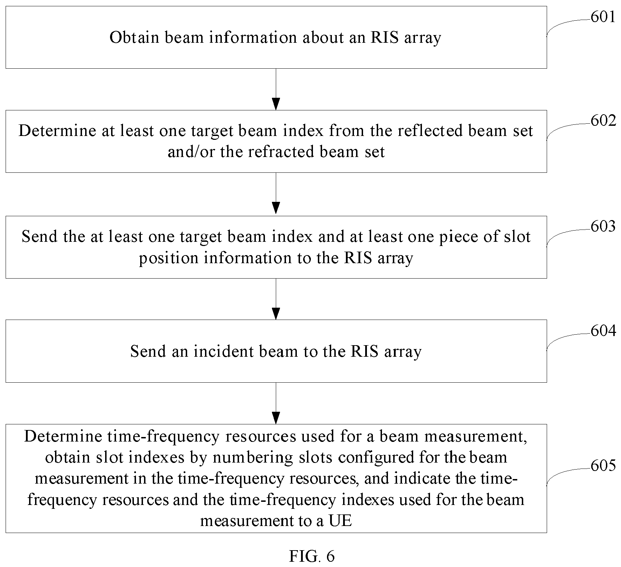

FIG. 6 is a schematic flowchart of a beam processing method provided by another example of the present invention, which is applied to a base station. As illustrated in FIG. 6, the beam processing method may include the following steps.

At step 601, beam information about an RIS array is obtained.

In an example of the present invention, the beam information includes a reflected beam set supported by the RIS array and/or a refracted beam set supported by the RIS array. The reflected beam set includes one or more angle ranges and one or more beam indexes corresponding to at least one reflected beam supported by the RIS array, and the refracted beam set includes one or more angle ranges and one or more beam indexes corresponding to at least one refracted beam supported by the RIS array; In an example of the present invention, the beam index may be a two-dimension beam index. In another example of the present invention, the beam index may be a one-dimension index.

In an example of the present invention, the above beam information may be reported by the RIS array. Alternatively, in another example of the present invention, the beam information may be obtained by the base station in an offline manner.

In addition, the detailed discussion on the beam information may make reference to related discussion in the foregoing examples, which is not repeated in this example of the present invention.

At step 602. at least one target beam index is determined from the reflected beam set and/or the refracted beam set.

In an example of the present invention, the base station may select a beam index corresponding to a certain beam from the reflected beam set and/or the refracted beam set as the target beam index. That is, the target beam index is the beam index of the certain beam among the reflected beams and/or the refracted beams supported by the RIS array.

At step 603, the at least one target beam index and at least one piece of slot position information are sent to the RIS array.

In an example of the present invention, the base station may send the at least one target beam index to the RIS array through signaling. In an example of the present invention, one piece of slot position information corresponds to at least one target beam index. The piece of slot position information indicates a position of a slot used by a target beam corresponding to the corresponding target beam index.

Furthermore, in an example of the present invention, the RIS array may be configured to reflect beams periodically and/or refract beams periodically. Alternatively, in another example of the present invention, the RIS array may be configured to reflect the beams aperiodically and/or refract the beams aperiodically. In an example of the present invention, the contents included in the slot position information vary with configurations of the RIS array. The detailed discussion on the contents included in the slot position information under the different configurations may make reference to the descriptions in the foregoing examples, which is not repeated in this example of the present invention.

At step 604, an incident beam is sent to the RIS array.

In an example of the present invention, after the base station sends the incident beam to the RIS array, the RIS array may determine a phase shift matrix for a target beam corresponding to the target beam index according to the direction of the incident beam, and perform a reflection and/or refraction operation on the incident beam sent by the base station based on the slot position information and the phase shift matrix.

At step 605, time-frequency resources used for a beam measurement are determined, slot indexes are obtained by numbering slots configured for the beam measurement in the time-frequency resources, and the time-frequency resources and the time-frequency indexes used for the beam measurement are indicated to a UE.

In an example of the present invention, an approach for the base station to determine the time-frequency resources used for beam measurement and number the slots configured for the beam measurement in the time-frequency resources to obtain the slot indexes may include determining a periodic time window for the beam measurement, and numbering the slots configured for the beam measurement in the periodic time window to obtain the slot indexes.

In an example of the present invention, after determining the time-frequency resources and the slot indexes used for the beam measurement, the base station may indicate the time-frequency resources and the time-frequency indexes used for the beam measurement to the UE, so that the UE may perform the beam measurement on the beam at the time-frequency resources used for the beam measurement to obtain a measurement result.

In an example of the present invention, the beam measurement may include at least one of the following:
measuring reference signal receiving power (RSRP);
measuring reference signal receiving quality (RSRQ);
measuring signal to interference plus noise ratio (SINR); or
measuring received signal strength indication (RSSI).

In view of the above, according to the beam processing method provided by the example of the present invention, the base station may obtain the beam information about the RIS array, determine at least one target beam index from the reflected beam set and/or the refracted beam set, send at least one target beam index and at least one piece of slot position information to the RIS array, send the incident beam to the RIS array, determines the time-frequency resources used for the beam measurement, number the slots configured for the beam measurement in the time-frequency resources to obtain the slot indexes, and indicate the time-frequency resources and the time-frequency indexes used for the beam measurement to the UE. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

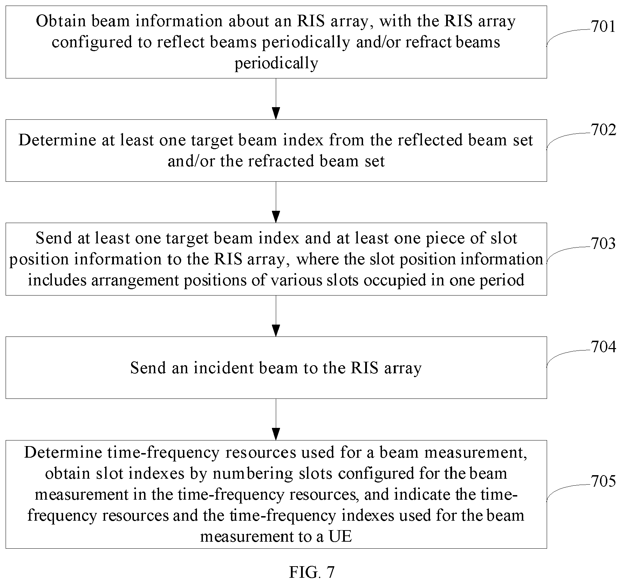

FIG. 7 is a schematic flowchart of a beam processing method provided by another example of the present invention, which is applied to a base station. As illustrated in FIG. 7, the beam processing method may include the following steps.

At step 701, beam information about an RIS array is obtained, with the RIS array configured to reflect beams periodically and/or refract beams periodically.

In an example of the present invention, the beam information may include a reflected beam set supported by the RIS array and/or a refracted beam set supported by the RIS array. The reflected beam set may include one or more angle ranges and one or more beam indexes corresponding to at least one reflected beam supported by the RIS array, and the refracted beam set may include one or more angle ranges and one or more beam indexes corresponding to at least one refracted beam supported by the RIS array;

In an example of the present invention, the detailed discussion on the beam information may make reference to relevant discussion in the foregoing examples, which is not repeated in this example of the present invention.

At step 702, at least one target beam index is determined from the reflected beam set and/or the refracted beam set.

At step 703, at least one target beam index and at least one piece of slot position information are sent to the RIS array, where the slot position information includes arrangement positions of various slots occupied in one period.

In an example of the present invention, one piece of slot position information corresponds to at least one target beam index. The piece of slot position information specifically indicates a position of a slot used by a target beam corresponding to the corresponding target beam index.

The detailed discussion on the contents included in the slot position information when the RIS array is configured to reflect the beams periodically and/or refract the beams periodically may make reference to the descriptions on the foregoing examples, which is not repeated in the example of the present invention.

At step 704, an incident beam is sent to the RIS array.

At step 705, time-frequency resources used for a beam measurement are determined, slot indexes are obtained by numbering slots configured for the beam measurement in the time-frequency resources, and the time-frequency resources and the time-frequency indexes used for the beam measurement are indicated to a UE.

In an example of the present invention, the detailed discussion on steps 704-705 may make reference to relevant discussion on the foregoing example, which is not repeated in this example of the present invention.

In view of the above, according to the beam processing method provided by the example of the present invention, the base station may obtain the beam information about the RIS array, determine at least one target beam index from the reflected beam set and/or the refracted beam set, send at least one target beam index and at least one piece of slot position information to the RIS array, send the incident beam to the RIS array, determines the time-frequency resources used for the beam measurement, number the slots configured for the beam measurement in the time-frequency resources to obtain the slot indexes, and indicate the time-frequency resources and the time-frequency indexes used for the beam measurement to the UE. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

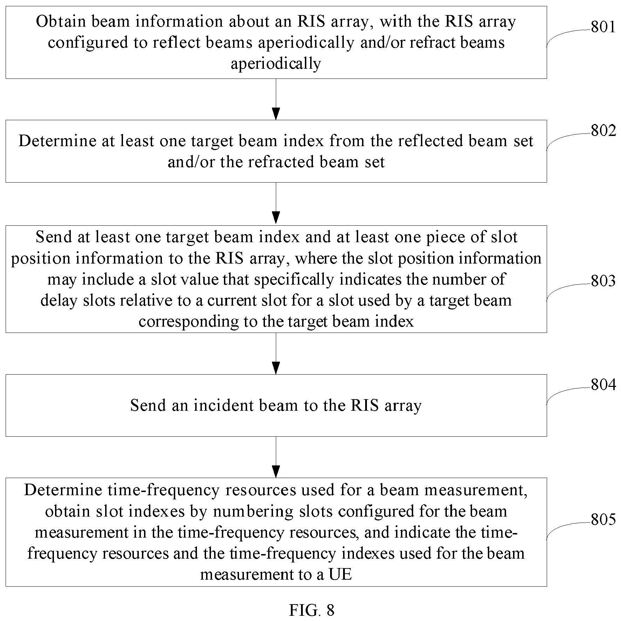

FIG. 8 is a schematic flowchart of a beam processing method provided by another example of the present invention, which is applied to a base station. As illustrated in FIG. 8, the beam processing method may include the following steps.

At step 801, beam information about an RIS array is obtained, with the RIS array configured to reflect beams aperiodically and/or refract beams aperiodically.

In an example of the present invention, the beam information may include a reflected beam set supported by the RIS array and/or a refracted beam set supported by the RIS array. The reflected beam set may include one or more angle ranges and one or more beam indexes corresponding to at least one reflected beam supported by the RIS array, and the refracted beam set may include one or more angle ranges and one or more beam indexes corresponding to at least one refracted beam supported by the RIS array;

In an example of the present invention, the detailed discussion on the beam information may make reference to relevant discussion in the foregoing examples, which is not repeated in this example of the present invention.

At step 802, at least one target beam index is determined from the reflected beam set and/or the refracted beam set.

At step 803, at least one target beam index and at least one piece of slot position information are sent to the RIS array, where the slot position information may include a slot value that specifically indicates the number of delay slots relative to a current slot for a slot used by a target beam corresponding to the target beam index, and the current slot refers to a slot occupied by the base station to send at least one target beam index.

In an example of the present invention, one piece of slot position information corresponds to at least one target beam index. The piece of slot position information specifically indicates a position of a slot used by a target beam corresponding to the corresponding target beam index.

In an example of the present invention, the detailed discussion on the contents included in the slot position information when the RIS array is configured to reflect the beams aperiodically and/or refract the beams aperiodically may make reference to the descriptions on the above examples, which is not repeated in the example of the present invention.

At step 804, an incident beam is sent to the RIS array.

At step 805, time-frequency resources used for a beam measurement are determined, slot indexes are obtained by numbering slots configured for the beam measurement in the time-frequency resources, and the time-frequency resources and the time-frequency indexes used for the beam measurement are indicated to a UE.

In an example of the present invention, the detailed discussion on steps 804-805 may make reference to relevant discussion on the foregoing examples, which is not repeated in this example of the present invention.

In view of the above, according to the beam processing method provided by the example of the present invention, the base station may obtain the beam information about the RIS array, determine at least one target beam index from the reflected beam set and/or the refracted beam set, send at least one target beam index and at least one piece of slot position information to the RIS array, send the incident beam to the RIS array, determines the time-frequency resources used for the beam measurement, number the slots configured for the beam measurement in the time-frequency resources to obtain the slot indexes, and indicate the time-frequency resources and the time-frequency indexes used for the beam measurement to the UE. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

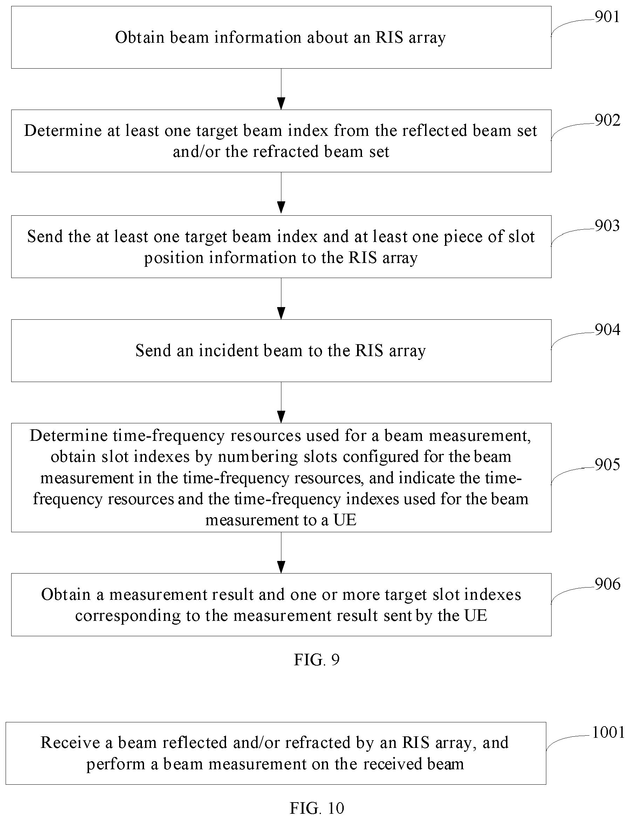

FIG. 9 is a schematic flowchart of a beam processing method provided by another example of the present invention, which is applied to a base station. As illustrated in FIG. 9, the beam processing method may include the following steps.

At step 901, beam information about an RIS array is obtained.

At step 902, at least one target beam index is determined from the reflected beam set and/or the refracted beam set.

At step 903, the at least one target beam index and at least one piece of slot position information are sent to the RIS array.

At step 904, an incident beam is sent to the RIS array.

At step 905, time-frequency resources used for a beam measurement are determined, slot indexes are obtained by numbering slots configured for the beam measurement in the time-frequency resources, and the time-frequency resources and the time-frequency indexes used for the beam measurement are indicated to a UE.

In an example of the present invention, the detailed discussion on steps 901-905 may make reference to relevant discussion on the foregoing examples, which is not repeated in this example of the present invention.

At step 906, a measurement result and one or more target slot indexes corresponding to the measurement result sent by the UE are obtained.

In an example of the present invention, the one or more target slot indexes corresponding to the measurement result refers to one or more slot indexes corresponding to one or more measurement slots for performing a measurement process corresponding to the measurement result.

In view of the above, according to the beam processing method provided by the example of the present invention, the base station may obtain the beam information about the RIS array, determine at least one target beam index from the reflected beam set and/or the refracted beam set, send at least one target beam index and at least one piece of slot position information to the RIS array, send the incident beam to the RIS array, determines the time-frequency resources used for the beam measurement, number the slots configured for the beam measurement in the time-frequency resources to obtain the slot indexes, and indicate the time-frequency resources and the time-frequency indexes used for the beam measurement to the UE. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

FIG. 10 is a schematic flowchart of a beam processing method provided by another example of the present invention, which is applied to a UE. As illustrated in FIG. 10, the beam processing method may include the following steps.

At step 1001, a beam reflected and/or refracted by an RIS array is received, and a beam measurement is performed on the received beam.

In an example of the present invention, the beam reflected and/or refracted by the RIS array received by the UE refers to the beam obtained through that "the RIS array performs the reflection and/or refraction operation on the incident beam sent by the base station based on the slot position information and the phase shift matrix" described in the foregoing examples.

In an example of the present invention, the beam measurement may include at least one of the following:
measuring RSRP;
measuring RSRQ;
measuring SINR; or
measuring RSSI.

In view of the above, according to the beam processing method provided by the example of the present invention, the UE may receive the beam reflected and/or refracted by the RIS array, and perform the beam measurement on the received beam. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

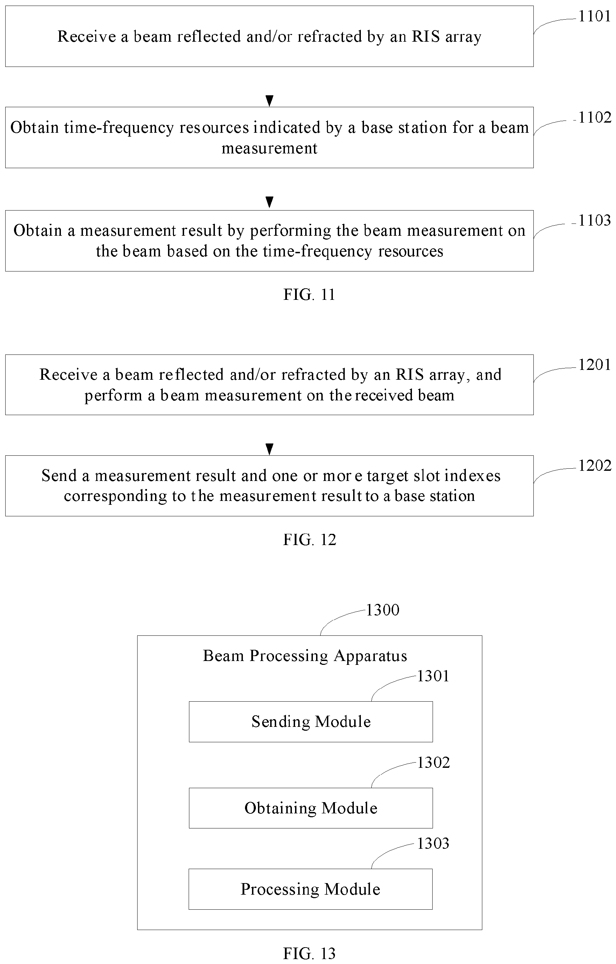

FIG. 11 is a schematic flowchart of a beam processing method provided by another example of the present invention, which is applied to a UE. As illustrated in FIG. 11, the beam processing method may include the following steps.

At step 1101, a beam reflected and/or refracted by an RIS array is received.

At step 1102, time-frequency resources indicated by a base station for a beam measurement are obtained.

In an example of the present invention, the UE may also obtain slot indexes corresponding to slots configured for the beam measurement in the time-frequency resources indicated by the base station for the beam measurement, so that the UE may find the slots configured for the beam measurement in the time-frequency resources in accordance with the slot indexes.

At step 1103, a measurement result is obtained by performing the beam measurement on the beam based on the time-frequency resources.

In an example of the present invention, an approach for performing the beam measurement on the beam based on the time-frequency resources to obtain the measurement result may include performing the beam measurement at slots configured for the beam measurement in the slot resources to obtain the measurement result.

In view of the above, according to the beam processing method provided by the example of the present invention, the UE may receive the beam reflected and/or refracted by the RIS array, and perform the beam measurement on the received beam. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

FIG. 12 is a schematic flowchart of a beam processing method provided by another example of the present invention, which is applied to a UE. As illustrated in FIG. 12, the beam processing method may include the following steps.

At step 1201, a beam reflected and/or refracted by an RIS array is received, and a beam measurement is performed on the received beam.

At step 1202, a measurement result and one or more target slot indexes corresponding to the measurement result are sent to a base station.

In an example of the present invention, the UE may only send the measurement result meeting a first condition and the one or more target slot indexes corresponding to the measurement result meeting the first condition to the base station. The first condition may include that the measurement result is greater than a first threshold. In an example of the present invention, the first threshold is configured by the base station to the UE.

In view of the above, according to the beam processing method provided by the example of the present invention, the UE may receive the beam reflected and/or refracted by the RIS array, and perform the beam measurement on the received beam. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

FIG. 13 is a schematic structure diagram of a beam processing apparatus provided by an example of the present invention. As illustrated in FIG. 13, the apparatus 1300 may include:
a sending module 1301 that is configured to send beam information about an RIS array to a base station, where the beam information includes a reflected beam set supported by the RIS array and/or a refracted beam set supported by the RIS array, and where the reflected beam set includes one or more angle ranges and one or more beam indexes corresponding to at least one reflected beam supported by the RIS array, and the refracted beam set includes one or more angle ranges and one or more beam indexes corresponding to at least one refracted beam supported by the RIS array;
an obtaining module 1302 that is configured to obtain at least one target beam index sent by the base station and determine at least one piece of slot position information, where one piece of slot position information corresponds to at least one target beam index and indicates a position of a slot used by a target beam corresponding to the corresponding target beam index; and
a processing module 1303 that is configured to determine a phase shift matrix for the target beam corresponding to the target beam index according to a direction of an incident beam, and perform a reflection and/or refraction operation on the incident beam sent by the base station based on the slot position information and the phase shift matrix.

In view of the above, according to the beam processing apparatus provided by the example of the present invention, the RIS array may send the beam information about the RIS array to the base station, then obtain at least one target beam index sent by the base station, determine at least one piece of slot position information, determine the phase shift matrix for the target beam corresponding to the target beam index according to the direction of the incident beam, and perform the reflection and/or refraction operation on the incident beam sent by the base station based on the slot position information and the phase shift matrix. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

In another example of the present invention, the beam information may include at least one of the following:
the reflected beam set supported by the RIS array;
the refracted beam set supported by the RIS array;
number of the reflected beams that the RIS array is capable of supporting simultaneously; or
number of the refracted beams that the RIS array is capable of supporting simultaneously.

Furthermore, in another example of the present invention, the angle range includes a first-dimensional angle range and a second-dimensional angle range, and the beam index is a two-dimension beam index.

The above apparatus is further configured to:
determine the first-dimensional angle ranges of various reflected beams and/or various refracted beams supported by the RIS array in a first dimension and the second-dimensional angle ranges of various reflected beams and/or various refracted beams supported by the RIS array in a second dimension;
combine the first-dimensional angle ranges and the second-dimensional angle ranges to determine the various reflected beams and/or the various refracted beams supported by the RIS array;
number various first-dimensional angle ranges and various second-dimensional angle ranges to obtain a two-dimension beam index (i, j) corresponding to each of the various reflected beams and/or the various refracted beams supported by the RIS array, where i indicates a first-dimensional angle range number of the reflected beam and/or the refracted beam, j indicates a second-dimensional angle range number of the reflected beam and/or the refracted beam; and
establish the reflected beam set and/or the refracted beam set based on the angle ranges and the two-dimension beam indexes corresponding to the reflected beams and/or the refracted beams.

Furthermore, in another example of the present invention, the angle range includes a first-dimensional angle range and a second-dimensional angle range, and the beam index is a one-dimension beam index.

The above apparatus is further configured to:
determine the first-dimensional angle ranges of various reflected beams and/or various refracted beams supported by the RIS array in a first dimension and the second-dimensional angle ranges of various reflected beams and/or various refracted beams supported by the RIS array in a second dimension;
combine the first-dimensional angle ranges and the second-dimensional angle ranges to determine the various reflected beams and/or the various refracted beams supported by the RIS array;
number the various reflected beams and/or the various refracted beams supported by the RIS array to obtain an one-dimension beam index of each of the various reflected beams and/or the various refracted beams supported by the RIS array; and
establish the reflected beam set and/or the refracted beam set based on the angle ranges and the one-dimension beam indexes corresponding to the reflected beams and/or the refracted beams.

Furthermore, in an example of the present invention, the RIS array is configured to reflect beams periodically and/or refract beams periodically, and the slot position information of the target beam includes arrangement positions of various slots occupied in one period.

Furthermore, in another example of the present invention, the RIS array is configured to reflect beams aperiodically and/or refract beams aperiodically, the slot position information of the target beam includes a slot value that indicates a number of delay slots relative to a current slot for a slot used by the target beam corresponding to the target beam index, and the current slot refers to a slot occupied when the base station sends the at least one target beam index.

Furthermore, in an example of the present invention, an approach for determining the at least one piece of slot position information may include at least one of the following:
obtaining the at least one piece of slot position information sent by the base station; or
determining at least one piece of slot position information based on protocol agreement.

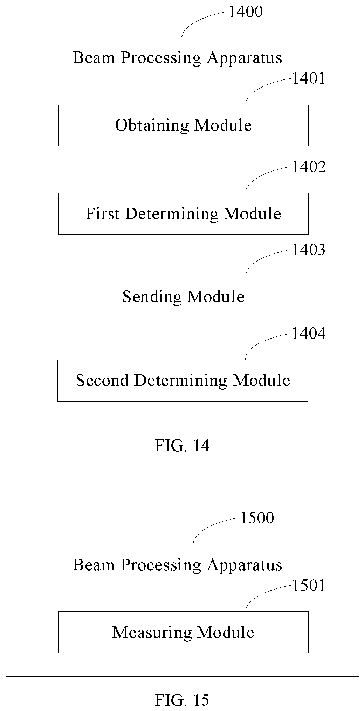

FIG. 14 is a schematic structure diagram of a beam processing apparatus provided by an example of the present invention. As illustrated in FIG. 14, the apparatus 1400 may include:
an obtaining module 1401 that is configured to obtain beam information about an RIS array, where the beam information includes a reflected beam set supported by the RIS array and/or a refracted beam set supported by the RIS array, and where the reflected beam set includes one or more angle ranges and one or more beam indexes corresponding to at least one reflected beam supported by the RIS array, and the refracted beam set includes one or more angle ranges and one or more beam indexes corresponding to at least one refracted beam supported by the RIS array;
a first determining module 1402 that is configured to determine at least one target beam index from the reflected beam set and/or the refracted beam set;
a sending module 1303 that is configured to send the at least one target beam index and at least one piece of slot position information to the RIS array, where one piece of slot position information corresponds to at least one target beam index and indicates a position of a slot used by a target beam corresponding to the corresponding target beam index, and
configured to send an incident beam to the RIS array; and
a second determining module 1404 that is configured to determine time-frequency resources used for a beam measurement, obtain slot indexes by numbering slots configured for the beam measurement in the time-frequency resources, and indicate the time-frequency resources and the time-frequency indexes used for the beam measurement to a UE.

In view of the above, according to the beam processing apparatus provided by the example of the present invention, the base station may obtain the beam information about the RIS array, determine at least one target beam index from the reflected beam set and/or the refracted beam set, send at least one target beam index and at least one piece of slot position information to the RIS array, send the incident beam to the RIS array, determines the time-frequency resources used for the beam measurement, number the slots configured for the beam measurement in the time-frequency resources to obtain the slot indexes, and indicate the time-frequency resources and the time-frequency indexes used for the beam measurement to the UE. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

Furthermore, in an example of the present invention, the RIS array is configured to reflect beams periodically and/or refract beams periodically, and the slot position information of the target beam includes arrangement positions of various slots occupied in one period.

Furthermore, in another example of the present invention, the RIS array is configured to reflect beams aperiodically and/or refract beams aperiodically, the slot position information of the target beam includes a slot value that indicates a number of delay slots relative to a current slot for a slot used by the beam corresponding to the target beam index, and the current slot refers to a slot occupied when the base station sends the at least one target beam index.

Furthermore, in another example of the present invention, the above apparatus is further configured to:
obtain a measurement result and a target slot index corresponding to the measurement result sent by the UE.

Furthermore, in another example of the present invention, determining the time-frequency resources used for the beam measurement and obtaining the slot indexes by numbering the slots configured for the beam measurement in the time-frequency resources include:
determining a periodic time window for the beam measurement, and numbering the slots in the periodic time window for the beam measurement to obtain the slot indexes.

Furthermore, in another example of the present invention, the beam measurement includes at least one of the following:
measuring RSRP;
measuring RSRQ;
measuring SINR; or
measuring RSSI.

FIG. 15 is a schematic structure diagram of a beam processing apparatus provided by an example of the present invention. As illustrated in FIG. 14, the apparatus 1500 may include:
a measuring module 1501 that is configured to receive a beam reflected and/or refracted by the RIS array, and perform a beam measurement on the received beam.

In view of the above, according to the beam processing apparatus provided by the example of the present invention, the UE may receive the beam reflected and/or refracted by the RIS array, and perform the beam measurement on the received beam. Thus, the RIS array in the examples of the present invention performs the reflection and/or refraction operation on the incident beam based on the phase shift matrix and the slot position information. The phase shift matrix is a matrix that makes the direction of the beam reflected and/or refracted by the RIS array follow the direction of the target beam indicated by the base station, and the slot position information refers to a position of a slot used by the target beam. That is, the RIS array in the examples of the present invention can implement the operation of "reflecting and/or refracting an incident beam to a UE in a specific direction at a specific slot" based on the indication from the base station, which has a high flexibility of beam processing.

In an example of the present invention, the measuring module 1501 is also configured to:
obtain time-frequency resources used for the beam measurement indicated by a base station; and
perform the beam measurement on the beam based on the time-frequency resources to obtain a measurement result.

Furthermore, in another example of the present invention, the above apparatus is further configured to:
send the measurement result and one or more target slot indexes corresponding to the measurement result to the base station.

Furthermore, in another example of the present invention, the above apparatus is further configured to:
send the measurement result meeting a first condition and the one or more target slot indexes corresponding to the measurement result meeting the first condition to the base station, where the first condition includes that the measurement result is greater than a first threshold.

Furthermore, in another example of the present invention, the first threshold is configured by the base station to the UE.

Furthermore, in another example of the present invention, the beam measurement includes at least one of the following:
measuring RSRP;
measuring RSRQ;
measuring SINR; or
measuring RSSI.

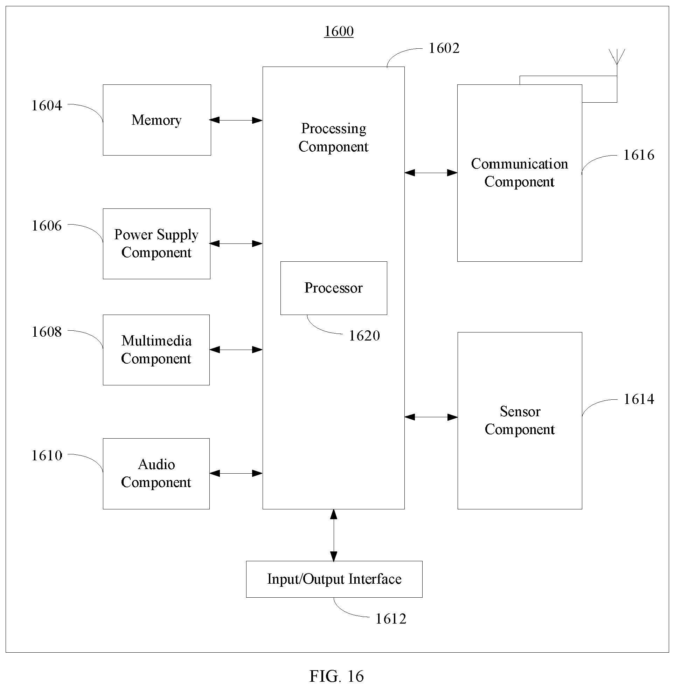

FIG. 16 is a block diagram of a UE 1600 provided by an example of the present invention. For example, UE1600 may be a mobile phone, a computer, a digital broadcasting terminal, a messaging device, a game console, a tablet device, a medical device, a fitness device, a personal digital assistant, and the like.

By referring to FIG. 16, UE 1600 may include at least one of the following components: a processing component 1602, a memory 1604, a power supply component 1606, a multimedia component 1608, an audio component 1610, an input/output (I/O) interface 1612, a sensor component 1613, and a communication component 1616.

The processing component 1602 generally controls the overall operations of UE 1600 such as operations associated with display, phone calls, data communications, camera operations, and recording operations. The processing component 1602 may include at least one processor 1620 to execute instructions to complete all or a part of the steps of the above methods. In addition, the processing component 1602 may include at least one module which facilitate the interaction between the processing component 1602 and other components. As an example, the processing component 1602 may include a multimedia module to facilitate the interaction between the multimedia component 1608 and the processing component 1602.

The memory 1604 is configured to store various types of data to support the operations of UE 1600. Examples of such data include instructions for any application or method operated on UE 1600 contact data, phonebook data, messages, pictures, videos, and the like. The memory 1604 may be implemented by any type of volatile or non-volatile storage device or a combination thereof, such as a static random access memory (SRAM), an electrically erasable programmable read-only memory (EEPROM), an erasable and programmable read-only memory (EPROM), a programmable read-only memory (PROM), a read-only memory (ROM), a magnetic memory, a flash memory, a magnetic disk or an optical disk.

The power supply component 1606 provides power for various components of UE 1600. The power supply component 1606 may include a power management system, at least one power supply, and other components associated with generating, managing, and distributing power for UE 1600.

The multimedia component 1608 includes a screen providing an output interface between UE 1600 and a user. In some examples, the screen may include a liquid crystal display (LCD) and a touch panel (TP). If the screen includes the TP, the screen may be implemented as a touch screen to receive input signals from the user. The TP may include at least one touch sensor to sense touches, swipes, and gestures on the TP. The touch sensors may not only sense a boundary of a touch or swipe, but also sense a lasting time and a pressure associated with the touch or swipe. In some examples, the multimedia component 1608 includes a front camera and/or a rear camera. The front camera and/or rear camera may receive external multimedia data when UE 1600 is in an operating mode, such as a photographing mode or a video mode. Each front camera and rear camera may be a fixed optical lens system or have focal length and optical zooming capability.

The audio component 1610 is configured to output and/or input audio signals. For example, the audio component 1610 includes a microphone (MIC) that is configured to receive an external audio signal when UE 1600 is in an operating mode, such as a call mode, a recording mode, and a voice recognition mode. The received audio signal may be further stored in the memory 1604 or transmitted via the communication component 1616. In some examples, the audio component 1610 also includes a speaker for outputting audio signals.

The I/O interface 1612 provides an interface between the processing component 1602 and a peripheral interface module. The above peripheral interface module may be a keyboard, a click wheel, buttons, or the like. These buttons may include but not limited to a home button, a volume button, a start button and a lock button.

The sensor component 1613 includes at least one sensor to provide UE 1600 with status assessments in various aspects. For example, the sensor component 1613 may detect an open/closed state of the device 1600 and a relative positioning of components such as the display and keypad of UE 1600, and the sensor component 1613 may also detect a change in position of UE 1600 or a component of UE 1600, the presence or absence of the target object contacting with UE 1600, orientation or acceleration/deceleration of UE 1600, and temperature change of UE 1600. The sensor component 1613 may include a proximity sensor configured to detect the presence of a nearby obj ect without any physical contact. The sensor component 1613 may further include an optical sensor, such as a complementary metal-oxide-semiconductor (CMOS) or charged coupled device (CCD) image sensor which is used in imaging applications. In some examples, the sensor component 1613 may also include an acceleration sensor, a gyro sensor, a magnetic sensor, a pressure sensor, or a temperature sensor.

The communication component 1616 is configured to facilitate wired or wireless communication between UE 1600 and other devices. UE 1600 may access a wireless network based on a communication standard, such as Wi-Fi, 2G, 3G, or a combination thereof. In one example, the communication component 1616 receives broadcast signals or broadcast related information from an external broadcast management system via a broadcast channel. In one example, the communication component 1616 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth^{®} (BT) technology and other technologies.

In one or more examples, UE 1600 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

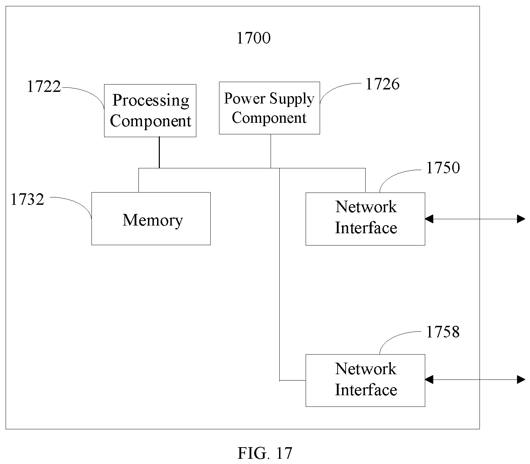

FIG. 17 is a block diagram of a base station 1700 provided by an example of the present invention. For example, base station 1700 may be provided as a base station. In referring to FIG. 17, base station 1700 includes a processing component 1711 which further includes at least one processor, and memory resources which represented by a memory 1732 and is used to store instructions that may be executed by the processing component 1722, e.g., application programs. The application programs stored in the memory 1732 may include one or more modules, each of which corresponds to a set of instructions. In addition, the processing component 1715 is configured to execute instructions to perform the aforementioned methods applicable to the base station, for example, the method illustrated in FIG. 1.

Base station 1700 may also include a power supply component 1726 which is configured to perform power management for base station 1700, a wired or wireless network interface 1750 which is configured to connect base station 1700 to a network, and an input/output (I/O) interface 1758. Base station 1700 may operate based on an operating system stored in the memory 1732, such as Windows Server^{™}, Mac OS X^{™}, Unix^{™}, Linux^{™}, FreeBSD^{™} or the like.

In the foregoing examples provided in the present invention, the methods provided in the examples of the present invention are introduced from the perspectives of the base station, the UE, and the RIS array, respectively. In order to realize the various functions in the methods provided in the foregoing examples of the present invention, the base station and the UE may include hardware structures and software modules, and implement the above various functions in the form of the hardware structures, the software modules, or the hardware structures plus the software modules. A certain function among the above various functions may be implemented in the form of a hardware structure, a software module, or a hardware structure plus a software module.

In the foregoing examples provided in the present invention, the methods provided in the examples of the present invention are introduced from the perspectives of the base station, the UE, and the RIS array, respectively. In order to realize the various functions in the methods provided in the foregoing examples of the present invention, a network-side device and the UE may include hardware structures and software modules, and implement the above various functions in the form of the hardware structures, the software modules, or the hardware structures plus the software modules. A certain function among the above various functions may be implemented in the form of a hardware structure, a software module, or a hardware structure plus a software module.

A communication device is provided by an example of the present invention. The communication device may include a transceiver module and a processing module. The transceiver module may include a transmitting module and/or a receiving module. The sending module is configured to implement a sending function, the receiving module is configured to implement a receiving function, and the transceiver module may implement the sending function and/or the receiving function.

The communication device may be a terminal device (such as the terminal device in the foregoing method examples), or a device in the terminal device, or a device that is used by matching the terminal device. Alternatively, the communication device may be a network device, or a device in the network device, or a device that is used by matching the network device.

Another communication device is provided by an example of the present invention. The communication device may be a network device, or a terminal device (such as the terminal device in the foregoing method examples). Alternatively, the communication device may be a chip, a chip system or a processor that supports the network device to implement the above methods, or a chip, a chip system or a processor that supports the terminal device to implement the above methods. The device may be configured to implement the methods described in the foregoing method examples, whose details may make reference to the descriptions in the foregoing method examples.

The communications device may include one or more processors. The processor may be a general processor or a dedicated processor or the like. For example, it may be a baseband processor or a central processing unit. For example, it may be a baseband processor or a central processor. The baseband processor may be configured to process communication protocols and communication data, and the central processor may be configured to control a communication device (such as a network-side device, a baseband chip, a terminal device, a terminal device chips, a distributed unit (DU) or a centralized unit (CU), etc.), execute a computer program and process data of the computer program.

Optionally, the communication device may further include one or more memories, on which a computer program may be stored, and the one or more processors execute the computer program, so as to enable the communication device to execute the methods described in the foregoing method examples. Optionally, data may further be stored in the one or more memories. The communication device and the one or more memories may be set separately or integrated together.

Optionally, the communication device may further include a transceiver and an antenna. The transceiver may be referred to as a transceiver unit, a transceiver, or a transceiver circuit, etc., and is configured to implement a transceiver function. The transceiver may include a receiver and a transmitter. The receiver may be called a receiving machine or a receiving circuit for implementing a receiving function, and the transmitter may be called a transmitting machine or a transmitting circuit for implementing a transmitting function.

Optionally, the communication device may further include one or more interface circuits. The interface circuit is configured to receive and transmit code instructions to the one or more processors. The one or more processors execute the code instructions to enable the communication device to perform the methods described in the foregoing method examples.

For the case where the communication device is a terminal device (such as the terminal device in the foregoing method examples), the one or more processors are configured to perform the method illustrated in any one of FIG. 11-FIG. 13.

For the case where the communication device is a network device, the transceiver is configured to perform the method illustrated in any one of FIG. 7-FIG. 10.

For the case where the communication device is an RIS array, the transceiver is configured to perform the method illustrated in any one of FIG. 1-FIG. 6.

In an implementation, the transceiver for implementing the receiving and transmitting function may be included in the processor. For example, the transceiver may be a transceiver circuit, or an interface, or an interface circuit. The transceiver circuit, interface or interface circuit for implementing the receiving and transmitting function may be separated or integrated together. The above transceiver circuit, interface or interface circuit may be configured to read and write code/data. Alternatively, the above transceiver circuit, interface or interface circuit may be configured to transmit or transfer signals.

In an implementation, the one or more processors may store a computer program, and the computer program runs on the one or more processors to enable the communication device to perform the methods described in the foregoing method examples. The computer program may be solidified in the one or more processors, in which case the one or more processors may be implemented by hardware.

In an implementation, the communication device may include a circuit, and the circuit may implement the function of transmitting, receiving or communicating in the foregoing method examples. The one or more processors and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The one or more processors and transceiver may also be fabricated with various IC processing technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (Gas), etc.

The communication device described in the above examples may be a network device or a terminal device (such as the terminal device in the foregoing method examples). However, the communication device described in the present invention is not limited by such a range, and the structure of the communication device may not be limited. The communication device may be a stand-alone device or may be a part of a larger device. For example, the communication device may be:
(1) stand-alone ICs, chips, or chip systems or subsystems;
(2) a set of one or more ICs, which may optionally include storage components for storing data and computer programs;
(3) ASIC, such as a modem;
(4) modules that may be embedded in other devices;
(5) a receiver, a terminal device, an intelligent terminal device, a cellular phone, a wireless device, a handset, a mobile unit, a vehicle device, a network device, a cloud device, an artificial intelligence device, etc.;
(6) others and so on.

For the case where the communications device may be the chip or the chip system, the chip includes processors and interfaces. The number of the processors may be one or more, and the number of the interfaces may be more than one.

Optionally, the chip also includes a memory for storing necessary computer programs and data.

Those skilled in the art may also understand that various illustrative logical blocks and steps presented in the examples of the present invention may be implemented through electronic hardware, computer software, or a combination of the both. Whether such functions are implemented through the hardware or the software depends on specific applications and overall system design requirements. Those skilled in the art may use various approaches to implement the described function for each specific application. However, such implementation should not be understood as exceeding the protection scope of the examples of the present invention.

An example of the present invention also provides a system for determining a side-link duration. The system includes the communication device as a terminal device (such as the first terminal device in the foregoing method examples) and the communication device as a network device in the above examples. Alternatively, the system includes the communication device as a terminal device (such as the first terminal device in the foregoing method examples) and the communication device as a network device in the above examples.

The present invention also provides a readable storage medium on which instructions are stored. The instructions, when executed by a computer, implement the functions of any one of the foregoing method examples.

The present invention also provides a computer program product, which implements the functions of any one of the foregoing method examples when being executed by a computer.

In the above examples, it can be implemented in whole or in part by software, hardware, firmware, or any combination thereof. When implemented in software, it can be implemented in whole or in part in the form of a computer program product. The computer program product includes one or more computer programs. When the computer programs are loaded and executed on a computer, the processes or function according to the examples of the present invention are generated in whole or in part. The computer may be a general-purpose computer, a dedicated computer, a computer network, or another programmable device. The computer programs may be stored in a computer-readable storage medium or transmitted from one computer-readable storage medium to another computer-readable storage medium, for example, the computer programs may be transmitted from a website site, a computer, a server or a data center via wire (for example, coaxial cable, optical fiber, digital subscriber line (DSL)) or wireless (for example, infrared, wireless, microwave, etc.) to another website, another computer, another server, or another data center. The computer-readable storage medium may be any available medium that can be accessed by a computer or a data storage device such as a server and a data center integrating one or more available media. The available medium may be a magnetic medium (for example, a floppy disk, a hard disk, a magnetic tape), an optical medium (for example, a high-density digital video disc (DVD)), or a semiconductor medium (for example, a solid state disk (SSD)), etc.

Those of ordinary skill in the art may understand that the first, second, and other numbers involved in the present invention are only for convenience of description, instead of limiting the scope of the examples of the present invention or indicating a sequential order.

"At least one" in the present invention may also be described as "one or more". The "more" may refer to two, three, four or more, which is not limited by the present invention. In the examples of the present invention, for a technical character, its technical factors are distinguished by "first," "second," "third," "A," "B," "C," and "D," etc. There is no any sequential order or size order between the technical features described by the "first," "second," "third," "A," "B," "C" and "D."

Other implementations of the present invention will be readily apparent to those skilled in the art after implementing the invention by referring to the specification. The present invention is intended to cover any variations, uses, or adaptations of the present invention that are in accordance with the general principles thereof and include common general knowledge or conventional technical means in the art that are not disclosed in the present invention. The description and the examples are only illustrative, and the scope and spirit of the present invention are to be indicated by appended claims.

It should be understood that the present invention is not limited to the above-described accurate structures illustrated in the drawings, and various modifications and changes can be made to the present invention without departing from the scope thereof. The scope of the present invention is to be limited only by the appended claims.

## Claims

1. A beam processing method, applied to a reconfigurable intelligent surface, RIS, array, comprising:
sending beam information about the RIS array to a base station, wherein the beam information comprises a reflected beam set supported by the RIS array and/or a refracted beam set supported by the RIS array, and wherein the reflected beam set comprises one or more angle ranges and one or more beam indexes corresponding to at least one reflected beam supported by the RIS array, and the refracted beam set comprises one or more angle ranges and one or more beam indexes corresponding to at least one refracted beam supported by the RIS array;
obtaining at least one target beam index sent by the base station and determining at least one piece of slot position information, wherein one piece of slot position information corresponds to at least one target beam index and indicates a position of a slot used by a target beam corresponding to the corresponding target beam index;
determining a phase shift matrix for the target beam corresponding to the target beam index according to a direction of an incident beam, and
performing a reflection and/or refraction operation on the incident beam sent by the base station based on the slot position information and the phase shift matrix.

2. The method of claim 1, wherein the beam information comprises at least one of the following:
the reflected beam set supported by the RIS array;
the refracted beam set supported by the RIS array;
number of the reflected beams that the RIS array is capable of supporting simultaneously; or
number of the refracted beams that the RIS array is capable of supporting simultaneously.

3. The method of claim 1, wherein the angle range comprises a first-dimensional angle range and a second-dimensional angle range, and the beam index is a two-dimension beam index; and
wherein the method further comprises:
determining the first-dimensional angle ranges of various reflected beams and/or various refracted beams supported by the RIS array in a first dimension and the second-dimensional angle ranges of various reflected beams and/or various refracted beams supported by the RIS array in a second dimension;
combining the first-dimensional angle ranges and the second-dimensional angle ranges to determine the various reflected beams and/or the various refracted beams supported by the RIS array;
numbering various first-dimensional angle ranges and various second-dimensional angle ranges to obtain a two-dimension beam index (i, j) corresponding to each of the various reflected beams and/or the various refracted beams supported by the RIS array, wherein i indicates a first-dimensional angle range number of the reflected beam and/or the refracted beam, j indicates a second-dimensional angle range number of the reflected beam and/or the refracted beam; and
establishing the reflected beam set and/or the refracted beam set based on the angle ranges and the two-dimension beam indexes corresponding to the reflected beams and/or the refracted beams.

4. The method of claim 1, wherein the angle range comprises a first-dimensional angle range and a second-dimensional angle range, and the beam index is a one-dimension beam index; and
wherein the method further comprises:
determining the first-dimensional angle ranges of various reflected beams and/or various refracted beams supported by the RIS array in a first dimension and the second-dimensional angle ranges of various reflected beams and/or various refracted beams supported by the RIS array in a second dimension;
combining the first-dimensional angle ranges and the second-dimensional angle ranges to determine the various reflected beams and/or the various refracted beams supported by the RIS array;
numbering the various reflected beams and/or the various refracted beams supported by the RIS array to obtain an one-dimension beam index of each of the various reflected beams and/or the various refracted beams supported by the RIS array; and
establishing the reflected beam set and/or the refracted beam set based on the angle ranges and the one-dimension beam indexes corresponding to the reflected beams and/or the refracted beams.

5. The method of claim 1, wherein the RIS array is configured to reflect beams periodically and/or refract beams periodically, and the slot position information of the target beam comprises arrangement positions of various slots occupied in one period; and
wherein determining at least one piece of slot position information comprises at least one of the following:
obtaining the at least one piece of slot position information sent by the base station; or
determining the at least one piece of slot position information based on protocol agreement.

6. The method of claim 1, wherein the RIS array is configured to reflect beams aperiodically and/or refract beams aperiodically, the slot position information of the target beam comprises a slot value that indicates a number of delay slots relative to a current slot for a slot used by the target beam corresponding to the target beam index, and the current slot refers to a slot occupied when the base station sends the at least one target beam index; and
wherein determining the at least one piece of slot position information comprises at least one of the following:
obtaining the at least one piece of slot position information sent by the base station; or
determining the at least one piece of slot position information based on protocol agreement.

7. Abeam processing method, applied to a base station, comprising:
obtaining beam information about a reconfigurable intelligent surface, RIS, array, wherein the beam information comprises a reflected beam set supported by the RIS array and/or a refracted beam set supported by the RIS array, and wherein the reflected beam set comprises one or more angle ranges and one or more beam indexes corresponding to at least one reflected beam supported by the RIS array, and the refracted beam set comprises one or more angle ranges and one or more beam indexes corresponding to at least one refracted beam supported by the RIS array;
determining at least one target beam index from the reflected beam set and/or the refracted beam set;
sending the at least one target beam index and at least one piece of slot position information to the RIS array, wherein one piece of slot position information corresponds to at least one target beam index and indicates a position of a slot used by a target beam corresponding to the corresponding target beam index;
sending an incident beam to the RIS array;
determining time-frequency resources used for a beam measurement,
obtaining slot indexes by numbering slots configured for the beam measurement in the time-frequency resources, and
indicating the time-frequency resources and the time-frequency indexes used for the beam measurement to a user equipment, UE.

8. The method of claim 7, wherein the RIS array is configured to reflect beams periodically and/or refract beams periodically, wherein the slot position information of the target beam comprises arrangement positions of various slots occupied in one period.

9. The method of claim 7, wherein the RIS array is configured to reflect beams aperiodically and/or refract beams aperiodically, the slot position information of the target beam comprises a slot value that indicates a number of delay slots relative to a current slot for a slot used by the beam corresponding to the target beam index, and the current slot refers to a slot occupied when the base station sends the at least one target beam index.

10. The method of claim 7, further comprising:
obtaining a measurement result and a target slot index corresponding to the measurement result sent by the UE.

11. The method of claim 7, wherein determining the time-frequency resources used for the beam measurement and obtaining the slot indexes by numbering the slots configured for the beam measurement in the time-frequency resources comprise:
determining a periodic time window for the beam measurement, and
numbering the slots in the periodic time window for the beam measurement to obtain the slot indexes.

12. The method of claim 7, wherein the beam measurement comprises at least one of the following:
measuring reference signal receiving power, RSRP;
measuring reference signal receiving quality, RSRQ;
measuring signal to interference plus noise ratio, SINR; or
measuring received signal strength indication, RSSI.

13. A beam processing method, applied to a user equipment, UE, comprising:
receiving a beam reflected and/or refracted by a reconfigurable intelligent surface, RIS, array, and performing a beam measurement on the received beam.

14. The method of claim 13, wherein performing the beam measurement on the received beam comprises:
obtaining time-frequency resources used for the beam measurement indicated by a base station; and
performing the beam measurement on the beam based on the time-frequency resources to obtain a measurement result.

15. The method of claim 14, further comprising:
sending the measurement result and one or more target slot indexes corresponding to the measurement result to the base station.

16. The method of claim 15, wherein sending the measurement result and the one or more target slot indexes corresponding to the measurement result to the base station comprises:
sending the measurement result meeting a first condition and the one or more target slot indexes corresponding to the measurement result meeting the first condition to the base station, wherein the first condition comprises that the measurement result is greater than a first threshold.

17. The method of claim 16, wherein the first threshold is configured by the base station to the UE.

18. The method of claim 13, wherein the beam measurement comprises at least one of the following:
measuring reference signal receiving power, RSRP;
measuring reference signal receiving quality, RSRQ;
measuring signal to interference plus noise ratio, SINR; or
measuring received signal strength indication, RSSI.

19. Abeam processing apparatus, comprising:
a sending module, configured to send beam information about a reconfigurable intelligent surface, RIS, array to a base station, wherein the beam information comprises a reflected beam set supported by the RIS array and/or a refracted beam set supported by the RIS array, and wherein the reflected beam set comprises one or more angle ranges and one or more beam indexes corresponding to at least one reflected beam supported by the RIS array, and the refracted beam set comprises one or more angle ranges and one or more beam indexes corresponding to at least one refracted beam supported by the RIS array;
an obtaining module, configured to obtain at least one target beam index sent by the base station and determine at least one piece of slot position information, wherein one piece of slot position information corresponds to at least one target beam index and indicates a position of a slot used by a target beam corresponding to the corresponding target beam index;
a processing module, configured to determine a phase shift matrix for the target beam corresponding to the target beam index according to a direction of an incident beam, and perform a reflection and/or refraction operation on the incident beam sent by the base station based on the slot position information and the phase shift matrix.

20. Abeam processing apparatus, comprising:
an obtaining module, configured to obtain beam information about a reconfigurable intelligent surface, RIS, array, wherein the beam information comprises a reflected beam set supported by the RIS array and/or a refracted beam set supported by the RIS array, and wherein the reflected beam set comprises one or more angle ranges and one or more beam indexes corresponding to at least one reflected beam supported by the RIS array, and the refracted beam set comprises one or more angle ranges and one or more beam indexes corresponding to at least one refracted beam supported by the RIS array;
a first determining module, configured to determine at least one target beam index from the reflected beam set and/or the refracted beam set;
a sending module, configured to send the at least one target beam index and at least one piece of slot position information to the RIS array, wherein one piece of slot position information corresponds to at least one target beam index and indicates a position of a slot used by a target beam corresponding to the corresponding target beam index, and configured to send an incident beam to the RIS array; and
a second determining module, configured to determine time-frequency resources used for a beam measurement, obtain slot indexes by numbering slots configured for the beam measurement in the time-frequency resources, and indicate the time-frequency resources and the time-frequency indexes used for the beam measurement to a user equipment, UE.

21. Abeam processing apparatus, comprising:
a measuring module, configured to receive a beam reflected and/or refracted by a reconfigurable intelligent surface, RIS, array, and perform a beam measurement on the received beam.

22. A communication device, comprising one or more processors and one or more memories, wherein a computer program is stored in the one or more memories, and the one or more processors execute the computer program stored in the one or more memories to enable the device to perform the method of any one of claims 1-6.

23. A communication device, comprising one or more processors and one or more memories, wherein a computer program is stored in the one or more memories, and the one or more processors execute the computer program stored in the one or more memories to enable the device to perform the method of any one of claims 7-12.

24. A communication device, comprising one or more processors and one or more memories, wherein a computer program is stored in the one or more memories, and the one or more processors execute the computer program stored in the one or more memories to enable the device to perform the method of any one of claims 13-18.

25. A communication device, comprising one or more processors and an interface circuit;
wherein the interface circuit is configured to receive and transmit code instructions to the one or more processors; and
wherein the one or more processors are configured to run the code instructions to perform the method of any one of claims 1-6.

26. A communication device, comprising one or more processors and an interface circuit;
wherein the interface circuit is configured to receive and transmit code instructions to the one or more processors; and
wherein the one or more processors are configured to run the code instructions to perform the method of any one of claims 7-12.

27. A communication device, comprising one or more processors and an interface circuit;
wherein the interface circuit is configured to receive and transmit code instructions to the one or more processors; and
wherein the one or more processors are configured to run the code instructions to perform the method of any one of claims 13-18.

28. A computer-readable storage medium for storing instructions, wherein the instructions, when executed, enable the method of any one of claims 1-6 to be implemented.

29. A computer-readable storage medium for storing instructions, wherein the instructions, when executed, enable the method of any one of claims 7-12 to be implemented.

30. A computer-readable storage medium for storing instructions, wherein the instructions, when executed, enable the method of any one of claims 13-18 to be implemented.
